# FASCICULE DE BREVET EUROPEEN

(11) **EP 1 267 110 B1**
(45) Date de publication et mention de la délivrance du brevet: **31.08.2005**
(21) Numéro de dépôt: 02291464.2
(22) Date de dépôt: 12.06.2002
(51) Int. Cl.: F16K 31/44, F16K 31/46, E03B 9/08

(54) **Dispositif de manoeuvre d'un robinet enterre**
Betätigungseinrichtung für einen unterirdischen Hahn
Actuating device for a buried tap

(30) Priorité: 15.06.2001 FR 0107837
(43) Date de publication de la demande: 18.12.2002
(73) Titulaire: GAZ DE FRANCE, 75017 Paris (FR)
(72) Inventeur: Broutta, Marc, 69100 Villeurbanne (FR); Mellas, Jean-Pierre, 01160 Priay (FR)
(74) Mandataire: Thévenet, Jean-Bruno

(56) Documents cités:
- DE-A- 2 557 271
- DE-A- 3 103 264
- DE-A- 3 940 378
- GB-A- 2 033 517
- US-A- 4 702 275

## Description

La présente invention a pour objet un dispositif de manoeuvre d'un robinet enterré placé dans un regard surmonté d'un tampon muni d'un couvercle, le robinet étant disposé sur un réseau de transport de fluide.

Le document DE-A-2 557 271 décrit un dispositif de manoeuvre conforme au préambule de la revendication 1.

On connaît déjà divers types de dispositifs de manoeuvre de robinets enterrés, notamment de robinets disposés sur un réseau de transport de gaz.

Les dispositifs existants sont relativement encombrants et imposent des contraintes pour les agents chargés de les transporter. Par ailleurs, il peut être gênant qu'un dispositif de manoeuvre ne se trouve pas à proximité d'un robinet si celui-ci doit être fermé en cas d'urgence.

C'est pourquoi il existe souvent des dispositifs de manoeuvre, tels que par exemple les dispositifs connus sous le nom de "clé fontainière", qui sont placés dans des allées d'immeubles, au voisinage des robinets à manoeuvrer. De tels dispositifs sont toutefois très inesthétiques et font fréquemment l'objet de vols qui impliquent un coût de remplacement et augmentent l'insécurité, les dispositifs de manoeuvre pouvant servir d'outils d'effraction par exemple de portes palières, de boîtes aux lettres ou de véhicules.

Par ailleurs, les dispositifs de manoeuvre situés dans des allées d'immeubles peuvent être utilisés par n'importe qui, non seulement pour la fermeture d'un robinet, mais également pour la réouverture de celui-ci. Ainsi, alors que la réouverture d'un robinet, notamment dans le cas d'un réseau de gaz, ne doit être autorisée que par un agent d'exploitation de ce réseau de gaz, ou par une personne mandatée pour cela, avec les dispositifs d'art antérieur placés dans des allées d'immeubles, n'importe qui peut procéder à la réouverture d'un robinet et ainsi conduire à des accidents, que ce soit par ignorance ou par malveillance.

La présente invention vise à remédier aux inconvénients précités et notamment à permettre d'éviter le transport d'outils lourds et encombrants ou l'exposition d'outils disgracieux et susceptibles d'être volés ou utilisés de façon abusive.

L'invention vise encore à assurer une sécurité accrue en rendant accessible aux tiers un dispositif de manoeuvre en cas de besoin de fermeture d'urgence face à un incident (incendie, fuite, dans le réseau de gaz ; inondation dans le cas d'eau ;...), tout en réservant la possibilité de réouverture aux agents qualifiés pour cela.

L'invention vise encore à réaliser un dispositif de manoeuvre compact dont la conception soit simple et le coût de fabrication réduit.

Ces buts sont atteints grâce à un dispositif de manoeuvre d'un robinet enterré placé dans un regard surmonté d'un tampon muni d'un couvercle, le robinet étant disposé sur un réseau de transport de fluide, le dispositif de manoeuvre comprenant :
a) un embout de commande raccordé de façon amovible audit robinet,
b) un tube inférieur de commande dont l'extrémité inférieure est solidaire de l'embout de commande, et
c) un tube supérieur de commande monté coulissant de façon télescopique par rapport au tube inférieur de commande, caractérisé en ce que l'extrémité supérieure du tube inférieur de commande est située au niveau du tampon sous le couvercle et en ce que le dispositif de manoeuvre comprend en outre :
d) un bras de manoeuvre monté à la partie supérieure du tube supérieur de commande,
e) des moyens de rappel élastique permettant un déplacement vers le haut du tube supérieur de commande par rapport au tube inférieur de commande,
f) des premiers moyens de verrouillage et de guidage non sécurisés permettant d'une part un maintien du tube supérieur de commande en position basse de façon concentrique au tube inférieur de commande et d'autre part un déploiement sélectif du tube supérieur de commande sous l'action des moyens de rappel élastique et la manoeuvre simultanée des tubes inférieur et supérieur de commande et de l'embout de commande dans le sens de la fermeture du robinet, et
g) des seconds moyens de verrouillage sécurisés comportant des moyens de retenue anti-retour pour empêcher, après une action de fermeture, la manoeuvre du robinet dans le sens de l'ouverture et des moyens pour autoriser une manoeuvre d'ouverture du robinet à l'aide d'une clé de déverrouillage introduite au niveau de la partie inférieure du tube supérieur de commande.

Selon un mode particulier de réalisation, les premiers moyens de verrouillage et de guidage non sécurisés et les seconds moyens de verrouillage sécurisés comprennent en commun des première et deuxième bagues anti-retour à cliquet interposées entre les tubes inférieur et supérieur de commande et respectivement solidaires de la partie supérieure du tube inférieur de commande et de la partie inférieure du tube supérieur de commande.

Selon une autre caractéristique particulière de l'invention, les seconds moyens de verrouillage sécurisés comprennent un ergot de solidarisation manoeuvrable par ladite clé de déverrouillage pour traverser les tubes supérieur et inférieur de commande afin de solidariser ceux-ci de façon sélective lorsque le tube supérieur de commande est en position déployée.

Le tube supérieur de commande peut être disposé à l'extérieur du tube inférieur de commande.

Selon une caractéristique avantageuse, le dispositif de manoeuvre comprend en outre un plateau solidaire de la partie supérieure du tube supérieur de commande et muni d'un indicateur de repérage de la position ouverte ou fermée du robinet, l'indicateur de repérage étant relié à l'embout de commande par un ensemble de tiges télescopiques solidaires en rotation et disposées à l'intérieur des tubes inférieur et supérieur de commande.

Selon une autre caractéristique avantageuse, le dispositif de manoeuvre comprend en outre une sangle de sécurité amovible disposée sous le robinet et reliée à l'embout de commande pour empêcher une déconnexion de l'embout de commande par rapport au robinet lors du déploiement du tube supérieur de commande sous l'action des moyens de rappel élastique.

Un ou plusieurs éléments d'adaptation peuvent être interposés entre l'embout de commande et le robinet.

Selon une caractéristique particulière, le bras de manoeuvre est monté sur un plateau solidaire de la partie supérieure du tube supérieur de commande de manière à pouvoir s'escamoter parallèlement audit tube supérieur de commande.

Selon un mode particulier de réalisation, les premiers moyens de verrouillage et de guidage non sécurisés comprennent une bague munie d'une ouverture sur une portion de sa périphérie et située à la base du tube supérieur de commande pour assurer par une rotation relative des tubes supérieur et inférieur de commande l'un par rapport à l'autre un verrouillage sur un pion d'arrêt situé sur la base du tube inférieur de commande lorsque le tube supérieur de commande est en position basse, contre l'action des moyens de rappel élastique.

D'autres caractéristiques et avantages de l'invention ressortiront de la description suivante de modes particuliers de réalisation, donnés à titre d'exemples, en référence aux dessins annexés, sur lesquels :
- la Figure 1 est une vue en coupe d'un regard dans lequel est installé un dispositif de manoeuvre de robinet enterré conforme à l'invention, le dispositif étant en position escamotée,
- la Figure 2 est une vue en coupe analogue à la Figure 1, mais montrant un dispositif de manoeuvre en coupe axiale en position déployée,
- la Figure 3 est une vue en perspective du dispositif de manoeuvre de la Figure 1,
- les Figures 4 à 6 sont des vues respectivement en élévation, de dessous et de dessus du dispositif de manoeuvre de la Figure 3,
- la Figure 7 est une vue en coupe selon la ligne VII-VII de la Figure 6 montrant notamment l'utilisation d'une clé de déverrouillage.
- les Figures 7A, 7B, 7C montrent en élévation des exemples d'adaptateurs pouvant être utilisés avec le dispositif des Figures 3 à 7,
- la Figure 8 est une vue en coupe selon la ligne VIII-VIII de la Figure 6 montrant notamment l'utilisation d'une sangle,
- la Figure 9 est une vue de dessus d'une plaque de fixation d'une sangle,
- les Figures 10 et 11 sont des vues respectivement de côté et en bout d'un exemple d'ergot de solidarisation pouvant être manoeuvré par une clé de déverrouillage,
- la Figure 12 est une vue de dessus d'un exemple d'organe de repérage de la position d'ouverture ou de fermeture d'un robinet,
- la Figure 13 est une vue de dessus d'un exemple de bague guide de verrouillage utilisable dans le dispositif de manoeuvre selon l'invention,
- la Figure 14 est une vue en perspective d'un ensemble de rondelle anti-retour à cliquet utilisable dans le dispositif de manoeuvre selon l'invention,
- la Figure 15 est une vue en perspective d'un premier exemple d'adaptateur pouvant être monté sur un embout de commande du dispositif de manoeuvre selon l'invention,
- la Figure 16 est une vue de dessus d'un deuxième exemple d'adaptateur pouvant être monté sur un embout de commande du dispositif de manoeuvre selon l'invention, et
- les Figures 17 et 18 sont des vues en perspective sous deux angles différents d'un troisième exemple d'adaptateur pouvant être monté sur un embout de commande du dispositif de manoeuvre selon l'invention.

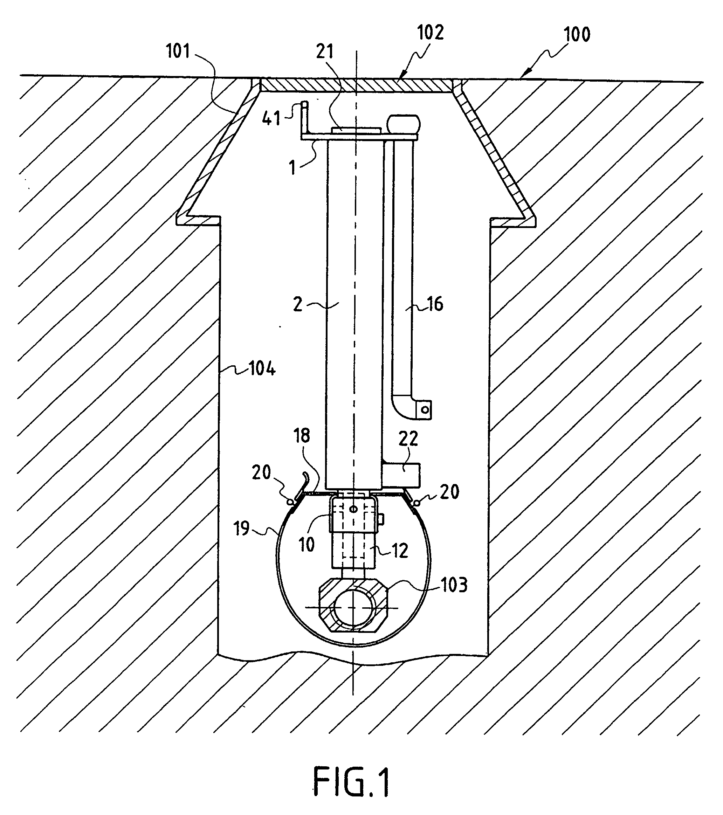

On voit sur la Figure 1 un exemple de réalisation de dispositif de manoeuvre selon l'invention installé dans un regard 104 surmonté d'un tampon 101 muni d'un couvercle 102, par exemple en fonte, disposé au niveau du sol 100.

Le dispositif de manoeuvre est destiné à commander l'ouverture ou la fermeture d'un robinet 103 disposé sur une canalisation enterrée d'un réseau de transport de fluide tel que le gaz.

Comme cela est expliqué plus en détail dans la suite de la description, le dispositif de manoeuvre selon l'invention, lorsqu'il n'est pas utilisé, est placé en position de repos, de façon compacte, à l'intérieur du regard 104 sous le couvercle 102 de sorte que le dispositif de manoeuvre est invisible, réduisant ainsi les risques de vol et n'occupant pas d'espace dans les locaux desservis par le branchement commandé par le robinet 103. Le couvercle 102 peut être muni d'une petite clé d'ouverture qui peut être placée sous un boîtier à verre dormant dans une allée des locaux desservis par le branchement commandé par le robinet 103. Une telle clé d'ouverture de couvercle, non représentée sur le dessin, est peu encombrante et compte tenu de sa petite taille, ne peut pas servir d'outil d'effraction et n'enlaidit pas les locaux où elle est placée.

Le dispositif de manoeuvre selon l'invention est spécifiquement conçu de manière à pouvoir être facilement accessible à toute personne en cas de besoin de fermeture d'urgence du robinet 103. Pour ce faire il suffit que la personne saisisse la clé d'ouverture du couvercle 102 et après avoir ôté ce couvercle 102, assure, par des mouvements très simples, le déploiement de la partie supérieure du dispositif de manoeuvre et la commande de la manoeuvre de fermeture du robinet 103.

Lors du retour du dispositif de manoeuvre dans la position de repos, sa conception garantit qu'il ne pourra pas être utilisé de façon intempestive pour une commande de réouverture du robinet 103 de façon non autorisée.

La Figure 1 montre le dispositif de manoeuvre à structure télescopique en position de repos, avec un tube extérieur vertical 2 en matériau rigide et inoxydable surmonté à sa partie supérieure d'un plateau 1 par exemple en forme de disque, sur lequel est disposé un bras de manoeuvre 16 qui, dans la position de repos de la Figure 1 est rabattu parallèlement au tube extérieur 2. Le plateau 1 comporte en outre un témoin visuel 21 de la position du robinet 103 (ouverture ou fermeture).

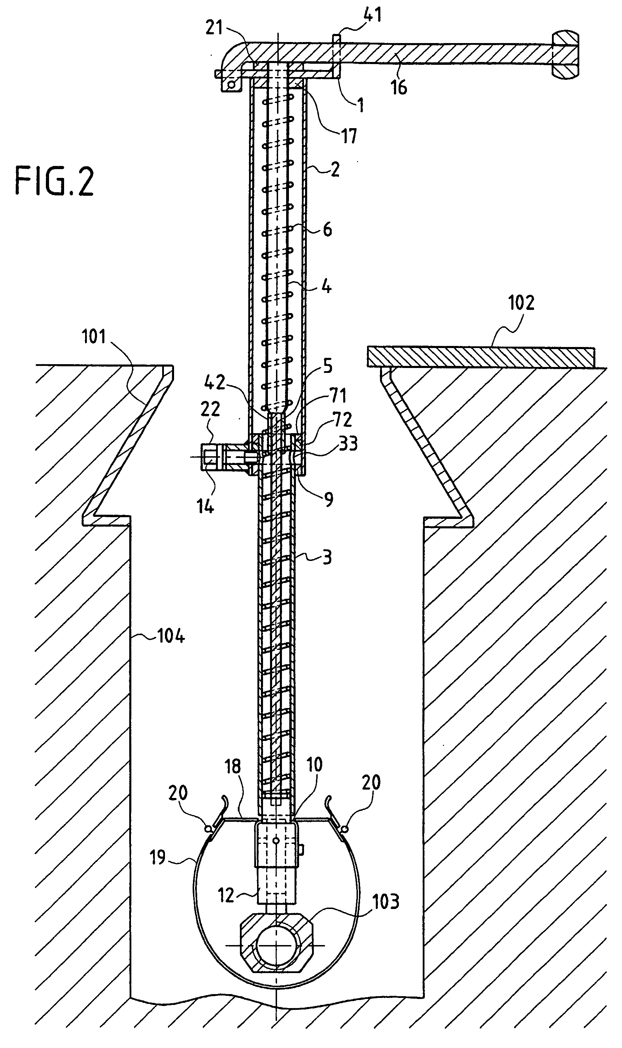

Le tube extérieur 2 constitue un tube supérieur à l'intérieur duquel est situé un tube inférieur 3 (voir Figure 2) dont la partie inférieure est prolongée par un embout de commande normalisé 10, présentant par exemple une ouverture carrée de 30 mm de côté, qui permet de commander directement la fermeture ou l'ouverture de robinets à tête carrée présentant la même dimension, mais permet également la commande de la fermeture ou de l'ouverture de tous autres types de robinets sous réserve de la mise en oeuvre d'un adaptateur tel que l'élément 12 qui permet par exemple de commander un robinet 103 à tête carrée de dimensions plus réduites.

Une sangle 19 est disposée sous le robinet 103 et rattachée de façon amovible, par exemple par des pions de retenue 20, à une plaque ou bague 18 qui peut être disposée juste au-dessus de l'embout 10 à la partie inférieure du tube inférieur 3 (Figures 1, 2 et 8, 9). La sangle 19 sert d'élément de sécurité et empêche tout dégagement intempestif de l'embout 10 lorsque le dispositif de manoeuvre est déployé pour venir dans la position de travail de la Figure 2.

La Figure 2 montre, après l'ouverture du couvercle 102 du tampon 101, la position de travail du dispositif de manoeuvre selon l'invention.

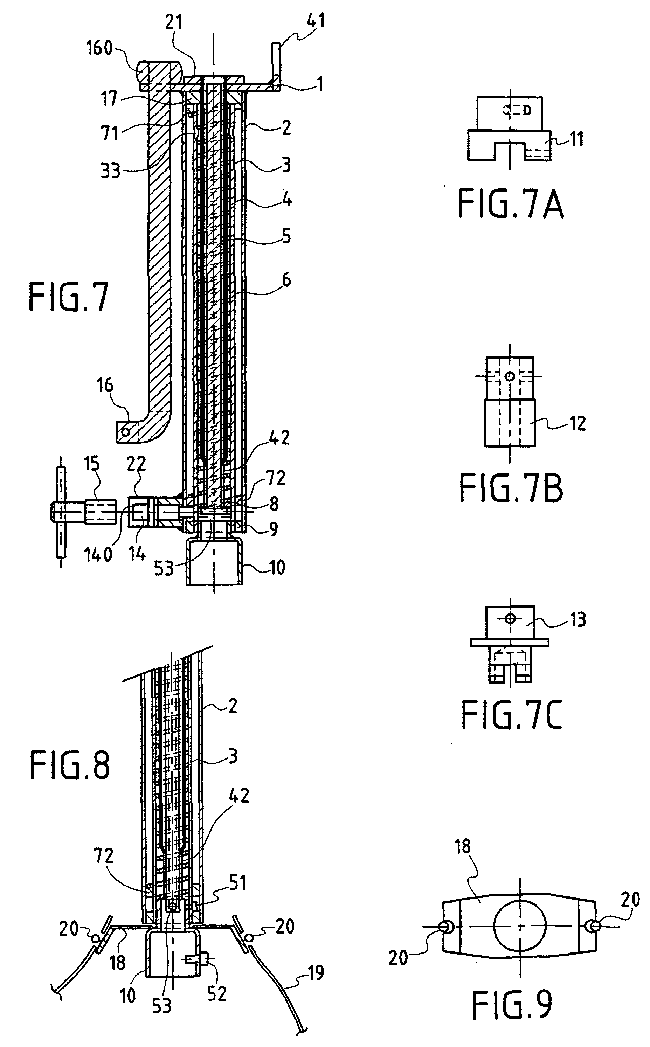

Après une action de déverrouillage du dispositif de manoeuvre par une simple rotation d'un quart de tour dans le sens inverse des aiguilles d'une montre, la bague 9 (Figures 2, 7 et 13) qui est solidaire de la partie inférieure du tube extérieur de commande 2 et possède une ouverture 90 sur sa périphérie, peut être dégagée par rapport à un pion d'arrêt 51 situé à la partie inférieure du tube intérieur 3 de commande (Figure 8).

Sous l'action du ressort de rappel 6 situé à l'intérieur des tubes télescopiques de commande 2, 3, le tube supérieur 2 coulisse vers le haut par rapport au tube inférieur 3 et émerge au-delà de l'ouverture du tampon 101.

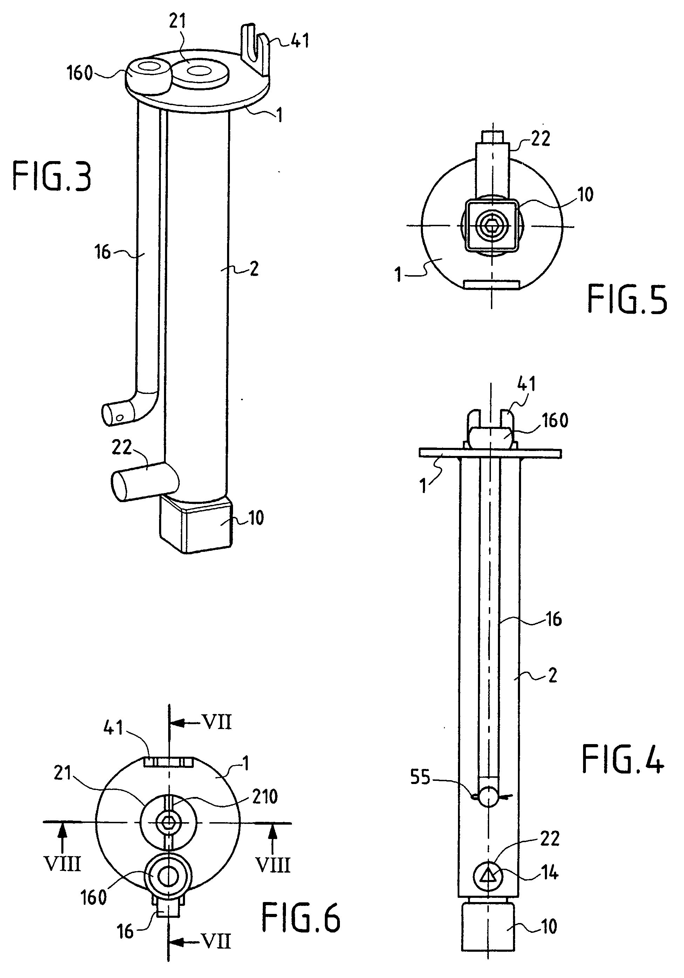

Le plateau de commande 1 fixé à la partie haute du tube supérieur 2 est alors sorti du regard 104 et le bras de manoeuvre 16 précédemment escamoté peut être dégagé en coulissant dans l'ouverture de réception du plateau 1 dans laquelle il est engagé et retenu par le bourrelet 160, pour être ensuite basculé en position horizontale et venir reposer par exemple sur l'étrier 41. Le bras de manoeuvre 16 pourrait également être rattaché au plateau 1 par une articulation. Une goupille 55 (Figure 4) permet d'éviter une dissociation intempestive du bras de manoeuvre 16 par rapport au plateau 1.

Le bras de manoeuvre escamotable 16 positionné horizontalement sur le plateau 1 permet à un opérateur d'assurer facilement la fermeture du robinet 103, dans le sens des aiguilles d'une montre, par l'intermédiaire de l'ensemble télescopique comprenant le tube supérieur 2, le tube inférieur 3, l'embout de commande 10 et l'adaptateur éventuel tel que l'élément 12.

La réouverture du robinet est rendue impossible grâce à un système de bagues anti-retour à cliquets 71, 72 qui constitue un système de verrouillage et de sécurisation de la fermeture du robinet 103.

De façon plus particulière, une première bague anti-retour à cliquets 71 est disposée à la partie supérieure du tube inférieur 3 et une deuxième bague anti-retour à cliquets 72 est disposée à la partie inférieure du tube supérieur 2, au-dessus de la bague 9 constituant un premier moyen de verrouillage non sécurisé du dispositif en position repliée.

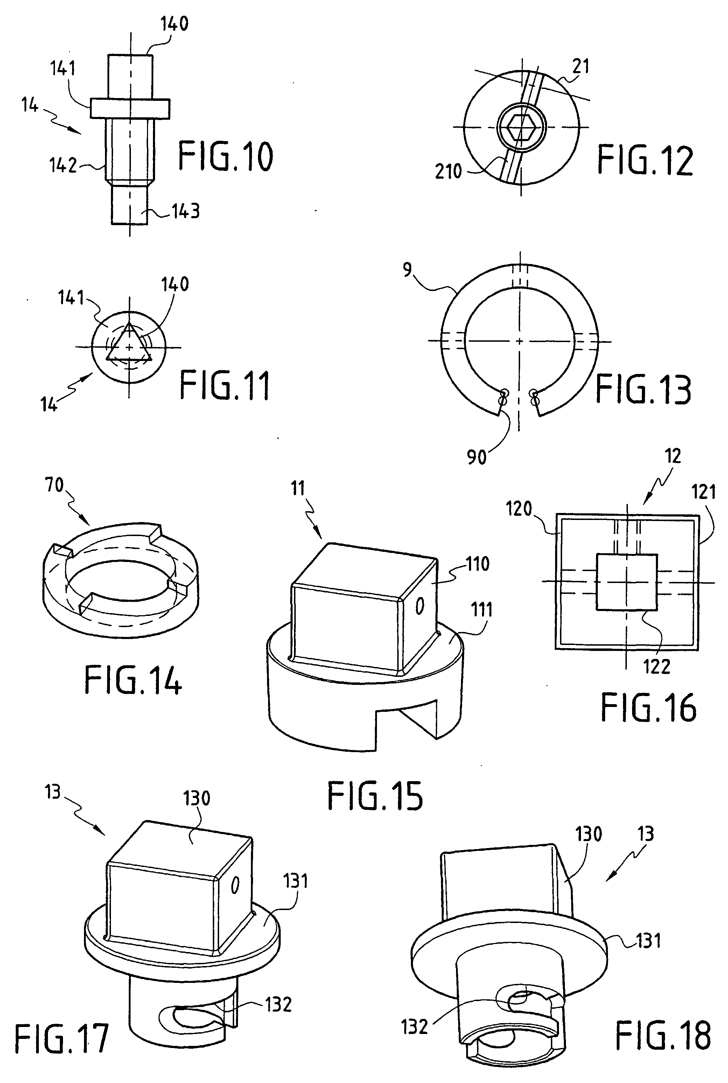

Les première et deuxième bagues anti-retour à cliquets 71, 72 peuvent présenter par exemple la forme de la bague 70 représentée sur la Figure 14 avec quatre marches réparties en croix. Les bagues 71, 72 servent à la fois de moyens de guidage lors du coulissement du tube extérieur 2 par rapport au tube intérieur 3, et de moyens de verrouillage empêchant une rotation dans le sens anti-horaire de l'ouverture du robinet 103.

Après la fermeture du robinet 103, le bras de manoeuvre 16 peut être ramené dans sa position de la Figure 1, le tube supérieur 2 est ramené également dans la position de la Figure 1 par coulissement autour du tube inférieur 3 contre l'action du ressort 6, jusqu'à ce que le plateau 1 vienne en butée sur l'extrémité supérieure du tube inférieur 3, et le verrouillage en position de repos s'effectue par rotation d'un quart de tour permettant à la bague guide de verrouillage 9 de former à nouveau une butée avec le pion d'arrêt correspondant fixé sur le tube inférieur 3, empêchant toute remontée du tube supérieur 2.

La bague 9 et les bagues 71, 72 peuvent être fixées sur les tubes respectifs par exemple à l'aide d'une soudure ou autre moyen de liaison équivalent (Figure 8).

Le dispositif de manoeuvre selon l'invention permet la réouverture du robinet 103 par un agent autorisé grâce à l'utilisation d'une petite clé normalisée 15 (Figure 7) possédant par exemple un profil triangulaire, qui vient s'engager dans un petit tube horizontal 22 qui est soudé à la partie inférieure du tube extérieur de commande 2 et qui incorpore un ergot de solidarisation 14 comportant une tête triangulaire 140, une collerette 141, un filetage 142 et une extrémité de blocage 143 (Figures 10 et 11) qui peut venir s'engager dans l'une des lumières 33 ménagées à la partie supérieure du tube inférieur 3.

Lorsque le dispositif de manoeuvre est dans la position déployée de la Figure 2, un agent autorisé muni d'une clé 15 (Figure 7) peut alors déplacer l'ergot de solidarisation pour permettre une solidarisation en rotation des tubes inférieur 3 et supérieur 2 grâce à la coopération de l'extrémité de blocage 143 solidaire du tube extérieur 2 et d'une lumière 33 ménagée dans le tube inférieur 3.

Après l'opération de réouverture du robinet 103 par un agent autorisé, les tubes 2 et 3 sont désolidarisés par dévissage de la vis à tête triangulaire 14 à l'aide de la clé 15. Le plateau de commande 1 est ensuite comprimé sur son axe 4, 5 contre l'action du ressort 6 jusqu'en butée contre l'extrémité supérieure du tube inférieur 3 et par suite d'une rotation d'un quart de tour dans le sens horaire, le dispositif de manoeuvre est à nouveau verrouillé de façon non sécurisée, par la coopération de la bague guide de verrouillage et du pion d'arrêt 19 précédemment décrit. Une opération de fermeture du robinet 103 est alors à nouveau rendue possible par toute personne.

Le plateau de commande 1 est réalisé dans un matériau rigide et inoxydable et peut présenter la forme d'un disque sur lequel peuvent être apposées, suivant divers procédés, des consignes de fonctionnement.

Un témoin visuel du sens de fermeture et d'ouverture du robinet 103 est matérialisé sur le plateau de commande 1 par une collerette 21 munie d'un repère 210, telle qu'une ligne ou gorge diamétrale (Figures 6 et 12). La collerette 21 est solidaire d'un tube central 4 dont au moins une partie, telle que la partie inférieure 42 présente un profil hexagonal et permet le coulissement d'une tige 5 à section hexagonale dont la partie inférieure est solidaire de l'embout de commande 10, par exemple à l'aide d'une goupille 53. La tige 5 et le tube 4 sont solidaires en rotation de sorte que la position du robinet 103 peut être matérialisée à tout instant quelle que soit la position du plateau de commande 1. La partie inférieure 42 du tube 4 peut être centrée à l'intérieur du tube 3 à l'aide d'une rondelle de centrage 8 (Figure 7).

Le dispositif de manoeuvre selon l'invention constitue un dispositif sécurisé qui, tout en signalant à tout instant la position du robinet à manoeuvrer, n'autorise à toute personne que l'action de fermeture et, grâce à la conception télescopique avec un système anti-retour verrouillable à clé, réserve l'action de réouverture à un agent qualifié muni d'une clé spécifique 15 de petite taille.

Les Figures 7A à 7C et 15 à 18 montrent divers exemples d'adaptateurs pour des robinets différents, pouvant être rapportés sur l'embout de commande 10 et fixés à celui-ci par exemple par une vis 52 (Figure 8).

L'adaptateur 11 (Figures 7A et 15) est prévu pour des robinets à tête de type barrette. Il comporte une tête carrée 110 engagée dans l'embout 10 et une base 111 dans laquelle est ménagée une fente 112.

L'adaptateur 12 (Figures 7B et 16) est prévu pour des robinets à tête carrée de petites dimensions, par exemple de 14 mm, et comprend une tête carrée 120 engagée dans l'embout 10 et une base 121 munie d'une ouverture 122 à section carrée de plus petites dimensions.

L'adaptateur 13 (Figures 7C, 17 et 18) est prévu pour des robinets à ergot et comprend une tête carrée 130 engagée dans l'embout 10 et une collerette 131 prolongée par une partie cylindrique inférieure munie d'une ouverture 132 à profil en S.

D'autres types d'adaptateurs sont naturellement envisageables en fonction des caractéristiques des divers robinets ou vannes enterrés. La forme de l'adaptateur 11, 12, 13 est indépendante du reste de la structure du dispositif de manoeuvre et il suffit que chaque adaptateur comporte une tête adaptée à l'embout de commande 10.

## Revendications

1. Dispositif de manoeuvre d'un robinet enterré (103) placé dans un regard (104) surmonté d'un tampon (101) muni d'un couvercle (102), le robinet (103) étant disposé sur un réseau de transport de fluide, le dispositif de manoeuvre comprenant :
a) un embout de commande (10) raccordé de façon amovible audit robinet (103),
b) un tube inférieur de commande (3) dont l'extrémité inférieure est solidaire de l'embout de commande (10), et
c) un tube supérieur de commande (2) monté coulissant de façon télescopique par rapport au tube inférieur de commande (3), **caractérisé en ce que** l'extrémité supérieure du tube inférieur de commande (3) est située au niveau du tampon (101) sous le couvercle (102) et **en ce que** le dispositif de manoeuvre comprend en outre :
d) un bras de manoeuvre (16) monté à la partie supérieure du tube supérieur de commande (2),
e) des moyens de rappel élastique (6) permettant un déplacement vers le haut du tube supérieur de commande (2) par rapport au tube inférieur de commande (3),
f) des premiers moyens (9, 51, 71, 72) de verrouillage et de guidage non sécurisés permettant d'une part un maintien du tube supérieur de commande (2) en position basse de façon concentrique au tube inférieur de commande (3) et d'autre part un déploiement sélectif du tube supérieur de commande (3) sous l'action des moyens de rappel élastique (6) et la manoeuvre simultanée des tubes inférieur et supérieur de commande (3, 2) et de l'embout de commande (10) dans le sens de la fermeture du robinet (103), et
g) des seconds moyens de verrouillage sécurisés (14, 33, 71, 72) comportant des moyens de retenue anti-retour (71, 72) pour empêcher, après une action de fermeture, la manoeuvre du robinet (103) dans le sens de l'ouverture et des moyens (14, 33) pour autoriser une manoeuvre d'ouverture du robinet (103) à l'aide d'une clé de déverrouillage (15) introduite au niveau de la partie inférieure du tube supérieur de commande (2).

2. Dispositif de manoeuvre selon la revendication 1, **caractérisé en ce que** les premiers moyens de verrouillage et de guidage non sécurisés et les seconds moyens de verrouillage sécurisés comprennent en commun des première et deuxième bagues anti-retour à cliquet (71, 72) interposées entre les tubes inférieur et supérieur de commande (3, 2) et respectivement solidaires de la partie supérieure du tube inférieur de commande (3) et de la partie inférieure du tube supérieur de commande (2).

3. Dispositif de manoeuvre selon la revendication 1 ou 2, **caractérisé en ce que** les seconds moyens de verrouillage sécurisés comprennent un ergot de solidarisation (14) manoeuvrable par ladite clé de déverrouillage (15) pour traverser les tubes supérieur et inférieur de commande (3, 2) afin de solidariser ceux-ci de façon sélective lorsque le tube supérieur de commande (2) est en position déployée.

4. Dispositif de manoeuvre selon l'une quelconque des revendications 1 à 3, **caractérisé en ce que** le tube supérieur de commande (2) est disposé à l'extérieur du tube inférieur de commande (3).

5. Dispositif de manoeuvre selon l'une quelconque des revendications 1 à 4, **caractérisé en ce qu'**il comprend en outre un plateau (1) solidaire de la partie supérieure du tube supérieur de commande (2) et muni d'un indicateur (21) de repérage de la position ouverte ou fermée du robinet (103), l'indicateur de repérage (21) étant relié à l'embout de commande (10) par un ensemble de tiges télescopiques (4, 5) solidaires en rotation et disposées à l'intérieur des tubes inférieur et supérieur de commande (3, 2).

6. Dispositif de manoeuvre selon l'une quelconque des revendications 1 à 5, **caractérisé en ce qu'**il comprend en outre une sangle de sécurité amovible (19) disposée sous le robinet (103) et reliée à l'embout de commande (10) pour empêcher une déconnexion de l'embout de commande (10) par rapport au robinet (103) lors du déploiement du tube supérieur de commande (2) sous l'action des moyens de rappel élastique (6).

7. Dispositif de manoeuvre selon l'une quelconque des revendications 1 à 6, **caractérisé en ce qu'**il comprend un ou plusieurs éléments d'adaptation (11, 12, 13) interposés entre l'embout de commande (10) et le robinet (103).

8. Dispositif de manoeuvre selon l'une quelconque des revendications 1 à 7, **caractérisé en ce que** le bras de manoeuvre (16) est monté sur un plateau (1) solidaire de la partie supérieure du tube supérieur de commande (2) de manière à pouvoir s'escamoter parallèlement audit tube supérieur de commande (2).

9. Dispositif de manoeuvre selon l'une quelconque des revendications 1 à 8, **caractérisé en ce que** les premiers moyens de verrouillage et de guidage non sécurisés comprennent une bague (9) munie d'une ouverture sur une portion de sa périphérie et située à la base du tube supérieur de commande (2) pour assurer par une rotation relative des tubes supérieur et inférieur de commande (2, 3) l'un par rapport à l'autre un verrouillage sur un pion d'arrêt (51) situé sur la base du tube inférieur de commande (3) lorsque le tube supérieur de commande (2) est en position basse, contre l'action des moyens de rappel élastique (6).

10. Dispositif de manoeuvre selon l'une quelconque des revendications 1 à 9, **caractérisé en ce qu'**il est appliqué à la commande de robinets de gaz.

## Patentansprüche

1. Betätigungsvorrichtung eines unterirdischen Leitungsventils (103), angeordnet in einem Schacht (104), der mit einem Stopfen (101) versehen ist, der mit einer Abdeckung (102) ausgerüstet ist, wobei das Leitungsventil (103) auf einem Netz zum Transport von Fluid angeordnet ist, wobei die Betätigungsvorrichtung umfasst:
a) ein Steueransatzstück (10), das lösbar mit dem Leitungsventil (103) verbunden ist,
b) ein unteres Rohr zur Steuerung (3), dessen unteres Ende fest mit dem Steueransatzstück (10) verbunden ist, und
c) ein oberes Rohr zur Steuerung (2), das teleskopisch verschiebbar im Verhältnis zu dem unteren Rohr zur Steuerung (3) angebracht ist,
d) ein Betätigungsarm (16), der am oberen Teil des oberen Rohres zur Steuerung (2) angebracht ist, **dadurch gekennzeichnet, dass** das obere Ende des unteren Rohres zur Steuerung (3) auf der Ebene des Stopfens (101) unter der Abdeckung (102) angeordnet ist und die Betätigungsvorrichtung weiter umfasst:
e) elastische Rückstellmittel (6), die eine Bewegung das obere Rohr zur Steuerung (2) im Verhältnis zum Innenrohr zur Steuerung (3) hinauf ermöglichen,
f) erste nicht gesicherte Verriegelungs- und Führungsmittel (9, 51, 71, 72), die einerseits ein Halten des oberen Rohres zur Steuerung (2) in unterer Position konzentrisch zum Innenrohr zur Steuerung (3) erlauben und andererseits eine selektive Ausbreitung des oberen Rohres zur Steuerung (3) unter der Wirkung der elastischen Rückstellmittel (6) und der gleichzeitigen Betätigung der unteren und oberen Rohre zur Steuerung (3, 2) und des Steueransatzstücks (10) in Schließrichtung des Leitungsventils (103) ermöglichen, und
g) zweite gesicherte Verriegelungsmittel (14, 33, 71, 72), welche Rückdrehsicherungsmittel (71, 72) umfassen, um nach einer Schließwirkung die Betätigung des Leitungsventils (103) in der Öffnungsrichtung zu verhindern, und Mittel (14, 33), um eine Öffnungsbetätigung des Leitungsventils (103) mit Hilfe eines Verriegelungsschlüssels (15) zuzulassen, der auf der Ebene des unteren Teils des oberen Rohres zur Steuerung (2) eingeführt wird.

2. Betätigungsvorrichtung nach Anspruch 1, **dadurch gekennzeichnet, daß** die ersten nicht gesicherten Verriegelungs- und Führungsmittel und die zweiten gesicherten Verriegelungsmittel gemeinsam erste und zweite Rückstellsperrringe mit Sperrklinke (71, 72) umfassen, die zwischen die oberen und unteren Rohre zur Steuerung (3, 2) eingefügt und jeweils fest mit dem oberen Teil des unteren Rohres zur Steuerung (3) und dem unteren Teil des oberen Rohres zur Steuerung (2) verbunden sind.

3. Betätigungsvorrichtung nach Anspruch 1 oder 2, **dadurch gekennzeichnet, daß** die zweiten gesicherten Verriegelungsmittel einen Befestigungszapfen (14) umfassen, der durch den Verriegelungsschlüssel (15) betätigt werden kann, um die oberen und unteren Rohre zur Steuerung (3, 2) zu durchlaufen, um jene selektiv fest zu verbinden, wenn das obere Rohr zur Steuerung (2) in ausgebreiteter Position ist.

4. Betätigungsvorrichtung nach einem der Ansprüche 1 bis 3, **dadurch gekennzeichnet, daß** das obere Rohr zur Steuerung (2) außerhalb des Innenrohrs zur Steuerung (3) angeordnet ist.

5. Betätigungsvorrichtung nach einem der Ansprüche 1 bis 4, **dadurch gekennzeichnet, daß** sie außerdem eine Platte (1) umfaßt, die fest mit dem oberen Teil des oberen Rohres zur Steuerung (2) verbunden ist und ausgerüstet ist mit einem Anzeiger (21) zur Kennzeichnung der Öffnungs- oder Schließposition des Leitungsventils (103), wobei der Anzeiger zur Kennzeichnung (21) mit dem Steueransatzstück (10) durch eine Anordnung von Teleskopstangen (4, 5) verbunden ist, die rotationsfest und in den unteren und oberen Rohren zur Steuerung (3, 2) angeordnet sind.

6. Betätigungsvorrichtung nach einem der Ansprüche 1 bis 5, **dadurch gekennzeichnet, daß** sie außerdem einen lösbaren Sicherungsgurt (19) umfaßt, der unter dem Leitungsventil (103) angeordnet und mit dem Steueransatzstück (10) verbunden ist, um ein Lösen des Steueransatzstücks (10) bezüglich des Leitungsventils (103) beim Ausbreiten des oberen Rohres zur Steuerung (2) unter der Wirkung der elastischen Rückstellmittel (6) zu verhindern.

7. Betätigungsvorrichtung nach einem der Ansprüche 1 bis 6, **dadurch gekennzeichnet, daß** sie eines oder mehrere Adapterelemente (11, 12, 13) umfaßt, die zwischen dem Steueransatzstück (10) und dem Leitungsventil (103) eingefügt sind.

8. Betätigungsvorrichtung nach einem der Ansprüche 1 bis 7, **dadurch gekennzeichnet, daß** der Betätigungsarm (16) auf einer Platte (1) fest mit dem oberen Teil des oberen Rohres zur Steuerung (2) derart verbunden ist, daß er sich parallel zum oberen Rohr zur Steuerung (2) versenken kann.

9. Betätigungsvorrichtung nach einem der Ansprüche 1 bis 8, **dadurch gekennzeichnet, daß** die ersten nicht gesicherten Verriegelungs- und Führungsmittel einen Ring (9) umfassen, der mit einer Öffnung in einem Teil seines Umfangs und am Fuß des oberen Rohres zur Steuerung (2) angeordnet versehen ist, um durch eine relative Rotation der oberen und unteren Rohre zur Steuerung (2, 3) zueinander ein Verriegeln auf einem Sperrstück (51) sicherzustellen, das am Fuß des Innenrohres zur Steuerung (3) angeordnet ist, wenn das obere Rohr zur Steuerung (2) in unterer Position ist, entgegen der Wirkung der elastischen Rückstellmittel (6).

10. Betätigungsvorrichtung nach einem der Ansprüche 1 bis 9, **dadurch gekennzeichnet, daß** sie auf die Steuerung von Gasleitungsventilen angewandt wird.

## Claims

1. Device for operating an underground tap (103) placed in an inspection hole (104) surmounted by a manhole plate (101) furnished with a cover (102), the tap (103) being placed on a fluid transport system, the operating device comprising:
a) a control end-piece (10) connected removably to the said tap (103),
b) a bottom control tube (3) whose bottom end is fixedly attached to the control end-piece (10), and
c) a top control tube (2) mounted so as to slide telescopically relative to the bottom control tube (3), **characterized in that** the top end of the bottom control tube (3) is situated at the level of the manhole plate (101) beneath the cover (102) and **in that** the operating device also comprises:
d) an operating arm (16) mounted on the top portion of the top control tube (2),
e) elastic return means (6) allowing an upward movement of the top control tube (2) relative to the bottom control tube (3),
f) first unsecured locking and guidance means (9, 51, 71, 72) allowing, on the one hand, a retention of the top control tube (2) in the low position concentrically with the bottom control tube (3) and, on the other hand, a selective deployment of the top control tube (3) under the action of the elastic return means (6) and the simultaneous operation of the bottom and top control tubes (3, 2) and of the control end-piece (10) in the direction of closure of the tap (103), and
g) second secured locking means (14, 33, 71, 72) comprising anti-return retention means (71, 72) to prevent, after a closure action, the operation of the tap (103) in the opening direction and means (14, 33) for allowing an operation for opening the tap (103) with the aid of an unlocking key (15) inserted at the bottom portion of the top control tube (2).

2. Operating device according to Claim 1, **characterized in that** the first unsecured locking and guidance means and the second secured locking means comprise in common first and second anti-return ratchet rings (71, 72) interposed between the bottom and top control tubes (3, 2) and respectively integral with the top portion of the bottom control tube (3) and the bottom portion of the top control tube (2).

3. Operating device according to Claim 1 or 2, **characterized in that** the second secured locking means comprise a positive connection lug (14) operable via the said unlocking key (15) to pass through the top and bottom control tubes (3, 2) in order to fixedly attach the latter in selective manner when the top control tube (2) is in the deployed position.

4. Operating device according to any one of Claims 1 to 3, **characterized in that** the top control tube (2) is placed outside the bottom control tube (3).

5. Operating device according to any one of Claims 1 to 4, **characterized in that** it also comprises a plate (1) fixedly attached to the top portion of the top control tube (2) and furnished with an indicator (21) for identifying the open or closed position of the tap (103), the identification indicator (21) being connected to the control end-piece (10) by an assembly of telescopic rods (4, 5) fixedly attached in rotation and placed inside the bottom and top control tubes (3, 2).

6. Operating device according to any one of Claims 1 to 5, **characterized in that** it also comprises a removable safety strap (19) placed beneath the tap (103) and connected to the control end-piece (10) to prevent a disconnection of the control end-piece (10) from the tap (103) during the deployment of the top control tube (2) under the action of the elastic return means (6).

7. Operating device according to any one of Claims 1 to 6, **characterized in that** it comprises one or more adaptation elements (11, 12, 13) interposed between the control end-piece (10) and the tap (103).

8. Operating device according to any one of Claims 1 to 7, **characterized in that** the operating arm (16) is mounted on a plate (1) fixedly attached to the top portion of the top control tube (2) in order to be able to be retracted parallel to the said top control tube (2).

9. Operating device according to any one of Claims 1 to 8, **characterized in that** the first unsecured locking and guidance means comprise a ring (9) furnished with an opening on a portion of its periphery and situated at the base of the top control tube (2) to provide, by a rotation of the top and bottom control tubes (2, 3) relative to one another, a locking on a stop pin (51) situated on the base of the bottom control tube (3) when the top control tube (2) is in the low position, against the action of the elastic return means (6).

10. Operating device according to any one of Claims 1 to 9, **characterized in that** it is applied to the control of gas taps.
